Europäisches Patentamt

European Patent Office

Office européen des brevets

(19)

(11) Veröffentlichungsnummer : **0 054 609**
**B1**

(12) # EUROPÄISCHE PATENTSCHRIFT

(45) Veröffentlichungstag der Patentschrift :
**11.04.84**

(21) Anmeldenummer : **81105825.4**

(22) Anmeldetag : **23.07.81**

(51) Int. Cl.³ : **H 04 B   3/20**, H 04 B   3/14,
H 04 L   5/14, H 04 L 25/03

(54) **Anordnung zur Nachstellung der Echolöscherkoeffizienten bei kombinierter adaptiver Echolöschung und Entzerrung.**

(30) Priorität : **17.12.80 DE 3047425**

(43) Veröffentlichungstag der Anmeldung :
**30.06.82 Patentblatt 82/26**

(45) Bekanntmachung des Hinweises auf die Patenterteilung : **11.04.84 Patentblatt 84/15**

(84) Benannte Vertragsstaaten :
**DE IT NL SE**

(56) Entgegenhaltungen :
**DE-A- 2 522 491
DE-A- 2 740 141
GB-A- 2 008 903
K.H. MUELLER "Echo Cancellation and Decision
Feedback Equalization", The Bell System Technical
Journal, Vol. 58, No. 2, 1979 AMERICAN TELEPHONE
AND TELEGRAPH CO., New York Seiten 491-500**

(73) Patentinhaber : **ANT Nachrichtentechnik GmbH
Gerberstrasse 33
D-7150 Backnang (DE)**

(72) Erfinder : **Hespelt, Volker, Dr.-Ing.
Lichtensteinstrasse 44
D-7150 Backnang (DE)**
Erfinder : **Till, Reinhard, Dr.-Ing.
Lutherweg 39
D-7150 Backnang (DE)**

(74) Vertreter : **Schickle, Gerhard, Dipl.-Ing. et al
ANT Nachrichtentechnik GmbH Patent- und Lizenzabteilung Gerberstrasse 33
D-7150 Backnang (DE)**

## Anordnung zur Nachstellung der Echolöscherkoeffizienten bei kombinierter adaptiver Echolöschung und Entzerrung

Die Erfindung betrifft eine Anordnung zur kombinierten adaptiven Entzerrung und adaptiven Löschung von Sprecherechos bei Duplex-Datenübertragung über Zweidrahtverbindungen mit den Merkmalen des Oberbegriffs des Anspruchs 1.

Eine solche Anordnung ist als betriebsinterner Stand der Technik bekannt.

Sollen über eine Zweidraht-Verbindung gleichzeitig und in gleicher Frequenzlage in beiden Richtungen Daten übertragen werden, so wird diese Übertragung durch Sprecherechos gestört oder gar verhindert. Die Kompensation dieser durch Reflexionen im Übertragungsweg entstandenen Sprecherechos ist durch eine adaptive Echolöscheinrichtung EC möglich.

Bei starken und sich eventuell noch zeitlich ändernden Kanalverzerrungen ist ferner ein adaptiver Entzerrer AE erforderlich. Dieser kann aus der Kombination eines linearen Vorwärtsentzerrers AET und eines rekursiven Entzerrers mit quantisierter Rückkopplung AER bestehen.

Kommt in einer Datenübertragungseinrichtung sowohl ein Echolöscher EC als auch ein adaptiver Entzerrer AE zum Einsatz, so bereitet die adaptive Nachstellung der Koeffizienten des Echolöschers EC und des adaptiven Entzerrers AE keine Schwierigkeiten, solange die adaptive Entzerrung ausschließlich rekursiv erfolgt.

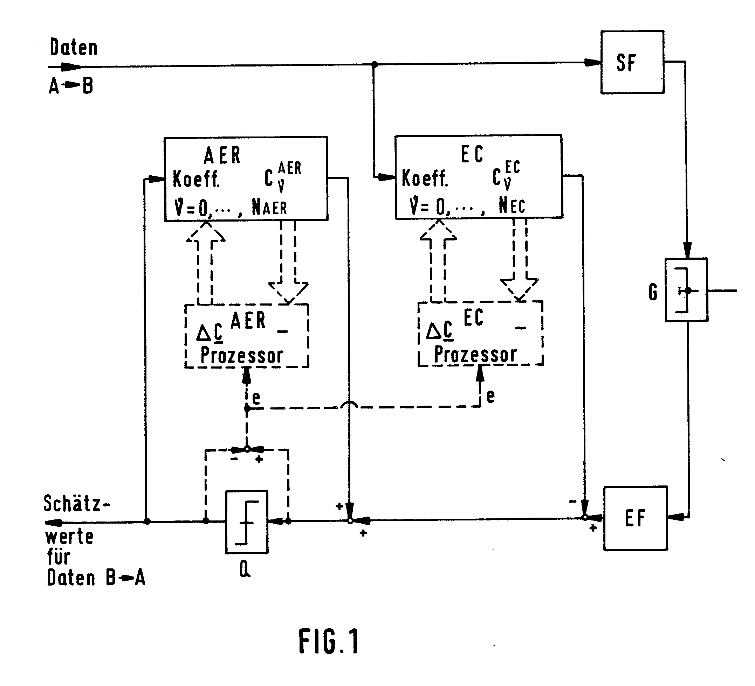

Die Figur 1 zeigt eine solche Anordnung, wie sie in der Zeitschrift « The Bell System Technical Journal », Vol. 58, N° 2, Febr. 1979, Seite 491 bis 500, im Aufsatz « Combining Echo Cancellation and Decision Feedback Equalization » von K. H. Mueller beschrieben ist. Dabei bedeuten SF Sendefilter, EF Empfangsfilter, G Gabelschaltung und Q Quantisierer.

Diese Anordnung hat jedoch den Nachteil, daß nur solche Kanäle entzerrt werden können, deren Impulsantworten keine Vorschwinger aufweisen. Wird jedoch vor dem Entscheider zusätzlich ein linearer Entzerrer AET zur Entzerrung der Vorschwinger eingesetzt, so muß dessen Einfluß bei der Nachstellung der Echolöscher-Koeffizienten berücksichtigt werden.

Üblicherweise werden Echolöscher EC, Vorwärtsentzerrer AET und Rekursiventzerrer AER als Transversalfilter realisiert, und die Nachstellung der Koeffizienten $c_\nu$ erfolgt mit Hilfe des Fehlers e und der Signalwerte $S_\nu^{EC}$ nach dem bekannten Gradientenverfahren nach P. Bocker « Datenübertragung », Bd., Springer Verlag 1976, Seite 224. Wird dieses Verfahren auch bei vorhandenem Vorwärtsentzerrer AET verwendet, so ergibt sich keine brauchbare Einstellung der Echolöscher-Koeffizienten.

Der Erfindung liegt daher die Aufgabe zugrunde, eine Anordnung zur kombinierten adaptiven Entzerrung und adaptiven Löschung von Sprecherechos bei Duplex-Datenübertragung über Zweidraht-Verbindungen anzugeben, deren Impulsantworten Vor- und Nachschwinger aufweisen.

Die Aufgabe wird gelöst wie in dem kennzeichnenden Teil des Anspruchs 1 beschrieben, die Unteransprüche geben vorteilhafte Weiterbildungen an.

Die Echolöschungs-Adaption wird entscheidend verbessert, wenn zur Nachstellung der Echolöscher-Koeffizienten neben dem Fehler e nicht die im Echolöscher EC selbst vorhandenen Signalswerte ~ $\tilde{S}_\nu^{EC}$, sondern modifizierte Signalwerte $\bar{S}_\nu^{EC}$ herangezogen werden. Diese Werte $\bar{S}_\nu^{EC}$ ergeben sich erfindungsgemäß aus den einer geeigneten Filterung unterworfenen Sendedaten ; sie können einem dem Hilfsfilter nachgeschalteten Schieberegister mit $N_{EC}+1$ Speicherplätzen entnommen werden.

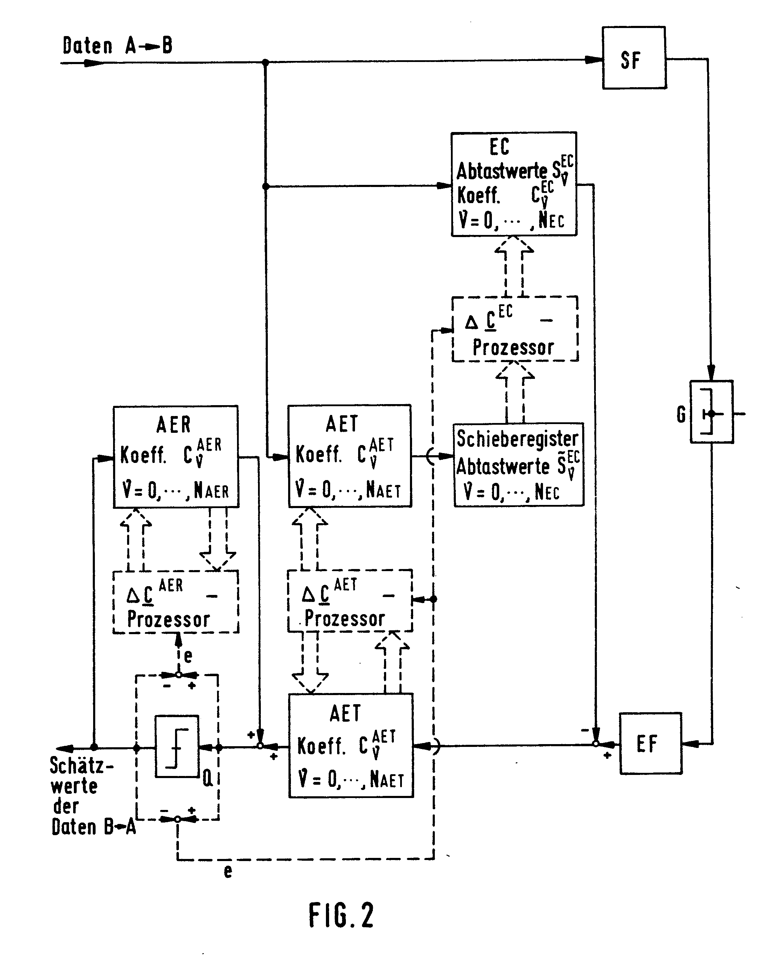

In Figur 2 ist ein Ausführungsbeispiel dargestellt, bei dem Hilfsfilter und Vorwärtsentzerrer AET gleich sind.

### Ansprüche

1. Anordnung zur kombinierten adaptiven Entzerrung und adaptiven Löschung von Sprecherechos bei Duplex-Datenübertragung über Zweidrahtverbindungen, wobei der Echolöscher (EC) direkt aus den Sendedaten ein Kompensationssignal bildet, das vor der Entzerrung vom Empfangssignal subtrahiert wird, und wobei die Entzerrung mit Hilfe eines Vorwärtsentzerrers (AET) und eines Rekursiventzerrers (AER) mit quantisierter Rückkopplung erfolgt, dadurch gekennzeichnet, daß zur Verstellung der Echolöscherkoeffizienten sowohl der aus der Differenz von Entscheidereingangs- und Entscheiderausgangssignal gebildete Fehler (e) als auch die durch ein Hilfsfilter mit nachgeschaltetem Schieberegister geeignet gefilterten Sendedaten ($\bar{S}_\nu^{EC}$) verwendet werden.

2. Anordnung nach Anspruch 1, dadurch gekennzeichnet, daß Vorwärtsentzerrer und Hilfsfilter die gleiche Filterung bewirken.

3. Anordnung nach Anspruch 1, dadurch gekennzeichnet, daß das Hilfsfilter durch ein Verzögerungsglied, dessen Verzögerungszeit gleich der Laufzeit des Vorwärtsentzerrers ist, realisiert ist.

4. Anordnung nach Anspruch 1, dadurch gekennzeichnet, daß Hilfsfilter und Vorwärtsentzerrer gleiche digitale Filter sind.

5. Anordnung nach Anspruch 1, dadurch gekennzeichnet, daß das Hilfsfilter und der Vorwärtsentzerrer identisch sind und im Zeitmultiplex betrieben werden.

### Claims

1. Arrangement for the combined adaptive distortion correction and adaptive cancellation of talker echoes in duplex data transmission by way of two-wire connections, wherein the echo canceller (EC) forms a compensation signal, which is subtracted from the received signal before the distortion correction, directly from the transmitted data and wherein the distortion correction takes place with the aid of a forward distortion correcter (AET) and a recursive distortion correcter (AER) with quantised feedback, characterised thereby, that the error (e) formed from the difference between the decider input signal and the decider output signal as well as also the transmitted data ( $\tilde{S}_\nu^{EC}$ ), suitably filtered by an auxiliary filter with shift register connected therebehind, are employed for the resetting of the echo canceller co-efficients.

2. Arrangement according to claim 1, characterised thereby, that forward distortion correcter and auxiliary filter effect the same filtering.

3. Arrangement according to claim 1, characterised thereby, that the auxiliary filter is realised by a delay member, the delay time of which is equal to the transit time of the forward distortion correcter.

4. Arrangement according to claim 1, characterised thereby, that auxiliary filter and forward distortion correcter are like digital filters.

5. Arrangement according to claim 1, characterised thereby, that the auxiliary filter and the forward distortion correcter are identical and operated in time multiplex.

**Revendications**

1. Dispositif pour la correction de distorsion adaptive et la suppression adaptive combinées d'échos de conversation dans la transmission de données en duplex par des liaisons à deux fils, où le suppresseur d'écho (EC) forme directement à partir des données à émettre un signal de compensation qui est déduit du signal reçu avant la correction et où la correction de distorsion s'effectue à l'aide d'un correcteur d'aller (AET) et d'un correcteur récursif (AER) à rétroaction quantifiée, caractérisé en ce que, pour la régulation du coefficient du suppresseur d'écho, on utilise à la fois l'erreur (e) formée par la différence entre le signal d'entrée du décideur et le signal de sortie du décideur, et les données à émettre ($\tilde{S}_\nu^{EC}$), filtrées convenablement par un filtre auxiliaire suivi d'un registre à décalage.

2. Dispositif selon la revendication 1, caractérisé en ce que le correcteur d'aller et le filtre auxiliaire produisent le même filtrage.

3. Dispositif selon la revendication 1, caractérisé en ce que le filtre auxiliaire est constitué par un élément temporisateur dont la temporisation est égale au temps de propagation du correcteur d'aller.

4. Dispositif selon la revendication 1, caractérisé en ce que le filtre auxiliaire et le correcteur d'aller sont des filtres numériques identiques.

5. Dispositif selon la revendication 1, caractérisé en ce que le filtre auxiliaire et le correcteur d'aller sont identiques et sont utilisés en multiplexage dans le temps.

FIG.1

FIG. 2